# EUROPÄISCHE PATENTANMELDUNG

(11) **EP 1 278 163 A1**
(43) Veröffentlichungstag der Anmeldung: **22.01.2003**
(21) Anmeldenummer: 02011225.6
(22) Anmeldetag: 22.05.2002
(51) Int. Cl.: G07B 15/02, G05B 21/00

(54) **Verfahren und System zur telekommunikationsgestützten Entrichtung und Abrechnung von Gebühren**

(30) Priorität: 16.07.2001 DE 10136603
(71) Anmelder: Deutsche Telekom AG, 53113 Bonn (DE)
(72) Erfinder: Bayer, Karl-Heinz, 96052 Bamberg (DE); Jung, Doris, 90439 Nürnberg (DE); Merz, Thomas, 53757 Augustin (DE); Leuschner, Siegmund, 28865 Lilienthal (DE); Nitsche, Bernhard, 90530 Wendelstein (DE)

(57) **Zusammenfassung**

Die Erfindung betrifft ein Verfahren und ein System zur telekommunikationsgestützten Entrichtung und Abrechnung von Gebühren, vorzugsweise zur Abwicklung des Zahlungsverkehrs für die Nutzung mautpflichtiger Wegstrecken.

Ihr liegt die Aufgabe zugrunde, die Entrichtung und die Abrechnung der Gebühren durch den Einsatz telekommunikationsgestützter Abläufe einfach und flexibel zu gestalten.

Dazu erfolgt die Entrichtung der Gebühren für den Erwerb einer Nutzungsberechtigung (die Buchung) für das Befahren eines kostenpflichtigen Abschnitts vorab auf telekommunikativem Wege durch Abbuchung von einem virtuellen Guthabenkonto. Dieses virtuelle Konto wird auf einem Zentralrechner verwaltet und ist dort mittels eines mobilen Telekommunikationsendgerätes (MTK) oder eines Internetzugangs unter der Rufnummer des MTK oder/und einem Identitätskriterium (Personal Account Number - PAN) ansprechbar. Das Konto wird zuvor im Prepaid-Modus durch den Kauf sowie die Freischaltung von Geldeinheiten mit einem Guthaben aufgefüllt. Die Einrichtung eines Kontos und die Freischaltung eines Guthabens erfolgen ebenfalls vermittels der Rufnummer des MTK oder/und einer beim Kauf der Geldeinheiten erhaltenen PAN.

## Beschreibung

Die Erfindung betrifft ein Verfahren und ein System zur telekommunikationsgestützten Entrichtung und Abrechnung von Gebühren für die Nutzung von mit einem Fahrzeug gebührenpflichtig zu befahrenden Abschnitten. Sie bezieht sich vorzugsweise auf die Abwicklung des Zahlungsverkehrs im Zusammenhang mit der Nutzung mautpflichtiger Wegstrecken. Durch die Nennung dieses vorzugsweisen Verwendungszwecks soll dabei jedoch zum Ausdruck gebracht werden, dass sich die Erfindung nicht auf diesen beschränkt. Vielmehr kann es sich im Sinne der Erfindung, im Hinblick auf das Befahren gebührenpflichtiger Abschnitte mit einem Fahrzeug, beispielsweise auch um die Vorabbuchung sowie die Abwicklung des Zahlungsverkehrs im Zusammenhang mit der Nutzung einer (zu diesem Zweck zu befahrenden) gebührenpflichtigen Fähre zum Übersetzen über ein Gewässer oder ähnliches handeln. Insoweit stellt der Einsatzfall mautpflichtiger Wegstrecken keine Beschränkung dar. Dennoch soll die Erfindung nachfolgend im Wesentlichen unter Zugrundelegung dieses Einsatzfalles diskutiert und erläutert werden. Gegenstand der Erfindung sind hingegen nicht Mechanismen mit denen die ordnungsgemäße Entrichtung der erforderlichen Gebühren beim Befahren eines gebührenpflichtigen Abschnitts kontrolliert werden kann.

Zur Gebührenerhebung für mautpflichtige Wegstrecken sind verschiedene Möglichkeiten bekannt. Gemäß der am häufigsten praktizierten Methode erfolgt die Erhebung der Gebühren eingangs oder ausgangs der gebührenpflichtigen Wegstrecke an speziell zu diesem Zweck eingerichteten Mautstellen. Die Mautstellen sind dabei entweder mit Mitarbeitern besetzt, durch welche die entsprechende Gebühr vom Fahrer eines Kraftfahrzeuges manuell abkassiert wird, oder das Abkassieren der Gebühr erfolgt mittels spezieller Gebührenautomaten. Die erstgenannte Variante ist vergleichsweise aufwendig und durch die Bindung von Personal sowie die hierfür anfallenden Kosten recht teuer. Bei der Verwendung von Automaten ist der POS (Point of Sale) aus technischen Gründen nicht in jedem Fall unmittelbar an der gebührenpflichtigen Wegstrecke lokalisiert. In diesem Fall entsteht dann für ortsunkundige Fahrer teilweise das Problem, sich orientieren oder gar den Automaten suchen zu müssen. Ein wesentlicher Nachteil beider Varianten besteht außerdem darin, dass es bei hohem Verkehrsaufkommen an den Mautstellen zur Bildung von Fahrzeugstaus kommt. Die Folgen sind unerwünscht lange Wartezeiten und damit, insbesondere für den kommerziellen Kraftverkehr, wirtschaftlich nachteilige Zeitverluste. Zudem sind die vorstehend dargestellten Systeme in der Regel wenig flexibel, so dass ein kurzfristig erforderliches Umbuchen, beispielsweise wegen notwendiger Änderung der Fahrtroute, problematisch, weil vergleichsweise aufwendig, ist.
In jüngerer Zeit wurden Systeme vorgeschlagen, die mit intern im Fahrzeug vorzusehenden elektronischen Einrichtungen arbeiten und eine weitgehend automatische Entrichtung und Abrechnung der Gebühren ermöglichen. Solche Systeme sind mit nicht unbeträchtlichen Investitionen verbunden. Für den Individualverkehr sind sie deshalb bisher nicht geeignet. Aber selbst für kommerzielle Unternehmen, wie kleinere Speditionen oder Kurierdienste, sind solche Systeme oft nicht wirtschaftlich sinnvoll einsetzbar. Letzteres betrifft insbesondere Unternehmen, deren Frachtaufkommen so gering ist, dass sich der Break Even Point in Bezug auf die Ausgaben für ein derartiges System durch die Auslastung der Kraftfahrzeuge nicht erreichen lässt.

Der Erfindung liegt daher die Aufgabe zugrunde, ein Verfahren anzugeben, mittels welchem die Nutzung, also das Befahren gebührenpflichtiger Abschnitte, durch den Einsatz telekommunikationsgestützter Abläufe für die Entrichtung und Abrechnung der Gebühren einfach, flexibel und für den Betreiber sowie die Benutzer preiswert bewerkstelligt werden kann. Die Aufgabe besteht weiterhin darin, ein zur Durchführung des Verfahrens geeignetes System zu schaffen.

Die Aufgabe wird durch ein Verfahren mit den Merkmalen des Hauptanspruchs sowie durch ein System, welches durch den systembezogenen Nebenanspruch charakterisiert ist, gelöst. Vorteilhafte Ausgestaltungen bzw. Weiterbildungen sind durch die jeweiligen Unteransprüche gegeben.
Entsprechend dem erfindungsgemäßen Verfahren erfolgt die Entrichtung der Gebühren zum Erwerb einer Nutzungsberechtigung (die Buchung) für das Befahren eines kostenpflichtigen Abschnitts [im weiteren mautpflichtige(r) (Weg-)Strecke bzw. Straßenabschnitt o. ä.] vorab auf telekommunikativem Wege durch Abbuchung von einem virtuellen Guthabenkonto. Dieses virtuelle Konto wird auf einem Zentralrechner verwaltet und ist dort mittels eines mobilen Telekommunikationsendgerätes (MTK) oder eines Internetzugangs unter der Rufnummer des MTK oder/und einem Identitätskriterium (Personal Account Number - PAN) ansprechbar. Das Konto ist zuvor im Prepaid-Modus durch den Kauf sowie die Freischaltung von Geldeinheiten mit einem Guthaben aufzufüllen. Dabei erfolgt die Einrichtung eines neuen Kontos und die Freischaltung eines Guthabens ebenfalls vermittels der Rufnummer des MTK oder/und einer beim Kauf der Geldeinheiten erhaltenen PAN. Soweit vorstehend und nachfolgend im Zusammenhang mit der Buchung bzw. der Kontenverwaltung ausschließlich die Verwendung der Rufnummer des MTK oder die Verwendung der Rufnummer und der PAN angesprochen wird, ist dies von der jeweiligen konkreten Ausgestaltung abhängig. Wie in den Ausführungsbeispielen dargestellt, ist unter Umständen bei der Buchung die Verwendung der Rufnummer ausreichend, während jedoch aus Sicherheitserwägungen dennoch eine PAN in den Ablauf einbezogen werden kann.
Gemäß einer praxisgerechten Ausgestaltung der Erfindung wird der Zentralrechner durch einen Service-Provider betrieben. Der Zahlungs- und Abrechnungsvorgang vollzieht sich dabei nach folgendem Verfahrensregime:
Zur Entrichtung von Gebühren wird, veranlasst durch den Benutzer einer mautpflichtigen Wegstrecke, mit einem MTK über eine dem Betreiber des gebührenpflichtigen Abschnitts zugeordnete zentrale Rufnummer oder über das Internet mit einer dem Betreiber zugeordneten IP-Adresse eine Telekommunikationsverbindung zu einem Zentralrechner des Service-Providers aufgebaut. In einem Dialog (Buchungsdialog) werden dann vermittels des MTK oder eines zum Aufbau der IP-Verbindung verwendeten Endgerätes die zur Bestimmung von Art und Umfang der beabsichtigten gebührenpflichtigen Nutzung erforderlichen Daten an den Zentralrechner übermittelt. Bestandteil dieser Daten sind zumindest das Kranfahrzeugkennzeichen des zur Nutzung des mautpflichtigen Straßenabschnitts vorgesehenen Fahrzeugs und beispielsweise Angaben wie Auf- und Abfahrort (z.B. Autobahnauffahrt/-Abfahrt), Via-Punkte (Routenverlauf) Tag der Fahrt, Uhrzeit, Gewichts-/Achsenklasse sowie Emissionsklasse des Fahrzeugs. Basierend auf diesen Angaben wird das Nutzungsentgelt ermittelt. Dies geschieht durch eine vom Zentralrechner des Service-Providers ansprechbare Recheneinheit des Betreibers der mautpflichtigen Strecke. In Fortführung des Buchungsdialogs wird schließlich nach einer Bestätigung durch den Benutzer von dessen virtuellen, auf den Zentralrechner geführten Guthabenkonto der entsprechende Gebührenbetrag abgebucht. Diese Abbuchung erfolgt unter fester sowie zweckbestimmter Verknüpfung mit dem angegebenen Kraftfahrzeugkennzeichen und bezogen auf die mit ihm verknüpfte Rufnummer des MTK oder/und PAN. Selbstverständlich setzt dabei die Ausführung der Buchung das Vorhandensein eines dem Nutzungsentgelt entsprechenden, freigeschalteten Guthabens auf dem virtuellen Konto voraus, wobei das Freischalten ebenfalls im Wege der Kontaktierung des Zentralrechners erfolgt. Der Betreiber der Mautstrecke erhält für jede Buchung eine Buchungsbestätigung sowie ein dem Buchungsbetrag oder einem Teil davon entsprechendes Entgelt.
Die Erfindung macht sich also das von der Gebührenverrechnung bei Mobilfunk- und Calling-Card-Betreibern bekannte und bereits umfangreich eingesetzte Prepaid-Prinzip zunutze. Entsprechend der vorstehend geschilderten Vorgehensweise fungiert der Service-Provider (Mobilfunkbetreiber, Internet-Provider, Calling-Card-Betreiber o. dgl.) dabei im Zusammenhang mit dem Zahlungsverkehr als ein zwischen dem Benutzer einer Mautstrecke und deren Betreiber vermittelnder Dienstleister. Er stellt dem Betreiber somit eine entsprechende hinsichtlich ihrer systembezogenen Ausgestaltung, später noch zu erläuternde telekommunikative Infrastruktur zur Verfügung. Entsprechend eines zwischen ihm und dem Betreiber der Mautstrecke geschlossenen Vertrages partizipiert er daher an den über diesen Dienst realisierten Einnahmen. Dem Betreiber wird folglich in der Regel vom Service-Provider nicht das gesamte vom virtuellen Konto des Benutzers der Mautstrecke abgebuchte Nutzungsentgelt gutgeschrieben. Dies gilt zumal, je nach der von wirtschaftlichen Überlegungen getragenen Umsetzung des Verfahrens, der Zentralrechner vom Service-Provider möglicherweise sogar nur aus technischer Sicht, nicht aber wirtschaftlich unterhalten wird, er also nur die technischen Ressourcen zur Verfügung stellt, der Rechner jedoch beispielsweise von einem das Handling und die Distribution von Prepaid-Karten managenden (gesonderten, möglicherweise auch Tochter-) Unternehmen gemietet und betrieben wird.
Vorzugsweise erhält auch der Benutzer über den Erwerb (die Buchung) einer Nutzungsberechtigung eine entsprechende Buchungsbestätigung. Diese Bestätigung wird ihm, je nach dem wie er den Zentralrechner des Service-Providers zum Zwecke der Buchung angesprochen hat, als SMS oder E-Mail übermittelt und kann von ihm gegebenenfalls auch mittels eines in das empfangende Gerät integrierten oder eines daran angeschlossenen Druckers ausgedruckt werden.
Der zur Buchung einer Nutzungsberechtigung, also zur Vorabentrichtung von Gebühren, vom Benutzer der Mautstrecke mittels seines Handys oder eines Gerätes mit Internetzugang geführte Buchungsdialog kann, entsprechend einer vorteilhaften Ausgestaltung des Verfahrens, sprachgesteuert erfolgen. Im einfacheren Fall ist es aber auch möglich, dass vom Nutzer zu tätigende Eingaben an der Tastatur des Mobiltelefons ausgeführt und mittels Tonwahlverfahren an den Zentralcomputer übermittelt werden, während entsprechende Antworten des Systems, beispielsweise auf dem Display des Handys, ausgegeben werden.
Bei einer Weiterbildung des Verfahrens ist zudem die Einbeziehung eines Call Centers vorgesehen. Insbesondere bei während des Buchungsdialogs auftretenden Fragen oder Problemen kann sich der Benutzer mit dem Call Center verbinden lassen. Nach einer entsprechenden Klärung der Fragen erfolgt dann eine Rückkehr zum Buchungsdialog, wobei jedoch der Benutzer die Buchung alternativ auch vom Call Center ausführen lassen kann. Letzteres bietet auch die Option, die Buchung grundsätzlich durch das Call Center ausführen zu lassen. Selbstverständlich muss der Benutzer dabei dem Call Center die hierfür notwendigen Angaben übermitteln. Bei Einbeziehung eines Call Centers in das Verfahrensregime kann es außerdem vorgesehen sein, dass der Buchungsdialog beim erstmaligen Erwerb einer Nutzungsberechtigung immer zwischenzeitlich zum Call Center verzweigt. Bei der Buchung über das IP-Netz kann im Zusammenhang mit der erstmaligen Buchung die Einbeziehung einer speziellen Registrierungswebsite vorgesehen sein.
Die auf der grundsätzlichen Idee der Nutzung des Prepaid-Prinzips beruhende Verfahrensführung ermöglicht insbesondere ein sehr flexibles Handling des Buchungsvorgangs. Hierdurch ist es möglich, den Buchungsdialog so auszugestalten, dass der Benutzer auch eine Stornierung oder Umbuchung früherer Buchungen vornehmen kann. Das Stornieren oder Umbuchen erfolgt dabei, analog der Vorgehensweise bei der ursprünglichen Buchung, ebenfalls mittels der Rufnummer des MTK oder/und einer PAN. Hierdurch gegebenenfalls zum Buchungsbetrag der früheren Buchung entstehende Differenzen werden dabei selbstverständlich auf dem virtuellen Guthabenkonto des Benutzers verrechnet. Außerdem erhält natürlich der Betreiber der Mautstrecke eine mit den vorgenommenen Änderungen korrespondierende Umbuchungsbestätigung. Bei der Abführung der ihm zustehenden Entgelte werden durch Stornieren oder Umbuchen entstandene Differenzen durch den Service-Provider auch beim Betreiber ausgeglichen.
Der Kauf der zur Auffüllung des virtuellen Kontos erforderlichen Geldeinheiten kann über unterschiedliche Möglichkeiten erfolgen. Eine Möglichkeit besteht darin, dass der potentielle Benutzer einer Mautstrecke an einem Kiosk oder Verkaufsstand eine Prepaid-Karte erwirbt, welche eine bestimmte Geldeinheit (beispielsweise 50, 100 oder 200 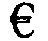 ) repräsentiert. Auf dieser Prepaid-Karte ist eine zur Freischaltung der entsprechenden Geldeinheit und gegebenenfalls auch zur Ausführung von Buchungen erforderliche PAN angegeben. Diese ist beispielsweise, entsprechend der gegenwärtigen Praxis bei der Abrechnung der Mobilfunknutzung, aus Sicherheitsgründen zunächst verdeckt und durch den Benutzer bzw. den Kunden freizurubbeln. Unter Verwendung der PAN kann der Benutzer dann durch Kontaktaufnahme mit dem die virtuellen Guthabenkonten verwaltenden Zentralrechner das auf der Prepaid-Karte ausgewiesene Guthaben zur späteren Verwendung für den Erwerb von Nutzungsberechtigungen zum Befahren der gebührenpflichtigen Fahrstrecken freischalten.
Bei einer anderen, gegebenenfalls auch parallel einsetzbaren Variante erfolgt der Verkauf der zur Auffüllung eines Kontos erforderlichen Geldeinheiten mittels Verkaufsautomaten. Die Freischaltung des am Automaten bezahlten Guthabens erfolgt dabei entweder unmittelbar durch die Eingabe der im Dialog vom Automaten erfragten Rufnummer eines MTK des Benutzers oder ebenso wie beim Erwerb einer Prepaid-Karte zu einem späteren Zeitpunkt mittels einer PAN. Im letztgenannten Fall wird die PAN durch den Automaten auf einem Quittungsbeleg beim Kauf der Geldeinheit ausgegeben. Der zum Kauf der Geldeinheiten dienende Automat steht zu diesem Zweck in Verbindung mit dem Zentralrechner des Service-Providers, auf welchem die auf die Quittungsbelege aufgedruckten PAN's generiert werden. Das Generieren der PAN's erfolgt dabei, wie im erstgenannten Fall unter Zuordnung einer Sicherheitszwecken dienenden ID-Nummer und wird protokolliert, wobei auch die Generierung fälschungssicherer PAN's möglich ist. Zum Zwecke des Datenschutzes und der Datensicherheit erfolgt der Austausch von zum Einrichten virtueller Konten, zum Freischalten von Guthaben oder zum Buchen einer Nutzungsberechtigung erforderlichen Daten zumindest teilweise in verschlüsselter Form.

Zu diesem Zweck bietet sich eine Verschlüsselung der Daten unter Nutzung des SSL-Protokolls (Secure Socket Layer-Protocol) an. Durch die mobile Buchung (Buchung mittels des Mobiltelefons) bzw. den Erwerb von Nutzungsberechtigungen über das Internet ermöglicht das erfindungsgemäße Verfahren eine sehr flexible Gestaltung der Buchungsvorgänge. Der Kraftfahrer kann von jedem Ort und 24 Stunden am Tag eine Buchung vornehmen, eine bereits erworbene Berechtigung Umbuchen oder Stornieren. Außerdem kann er, wie bereits ausgeführt, die Buchung zu seiner Entlastung entsprechend vorteilhafter Verfahrensgestaltungen auch durch ein Call Center vornehmen lassen. Gleiches gilt bei der Verwendung eines Internetzugangs zum Ansprechen des virtuellen Guthabenkontos. Bei der Buchung wird der Kraftfahrer mittels des Buchungsdialoges in effizienter Weise durch das System unterstützt. Vorzugsweise erhält er im Zusammenhang mit der von ihm nach Tätigung der Eingaben erforderlichen Bestätigung einer Buchung zudem vorab eine detaillierte Kosteninformation.
Ein zur Durchführung des Verfahrens der telekommunikationsgestützten Entrichtung und Abrechnung der Gebühren geeignetes System umfasst dabei zumindest einen (aus technischer Sicht) von einem Service-Provider betriebenen Zentralrechner (VCC-Plattform = Virtuelle Calling Card-Plattform), eine mit der VCC-Plattform verbindbare und von ihr ansprechbare Recheneinheit des Betreibers des gebührenpflichtigen Abschnitts sowie mobile Telekommunikationsendgeräte (MTK) oder Geräte mit Internetzugang, mittels welcher die Benutzer gebührenpflichtiger Abschnitte zum Zwecke des Einrichtens, des Freischaltens oder des Erwerbs (Buchens) einer Nutzungsberechtigung Zugriff auf ein oder mehrere für sie auf der VCC-Plattform unter der Rufnummer eines MTK oder/und einem Identitätskriterium (Personal Account Number - PAN) verwaltete virtuelle Guthabenkonten haben. Auf der Recheneinheit des Betreibers der Mautstrecke werden dabei die Tarifdaten gehalten und im Fall des Buchens, also des Erwerbs von Nutzungsberechtigungen, die Nutzungsentgelte berechnet. Die Zentrale der VCC-Plattform ist im Hinblick auf ein hohes Datenaufkommen vorzugsweise als Massiv Parallel Rechner ausgebildet. Vorteilhafterweise ist die VCC-Plattform von einem eine Buchung vornehmenden Benutzer einer Mautstrecke (Kunden) mittels seines MTK über einen zwischengeschalteten Dialogserver ansprechbar.
Entsprechend einer praxisgerechten Ausbildung des Systems ist die Recheneinheit des Betreibers über einen https-Request (https - gesichertes Hiper Text Transfer Protocol) ansprechbar. Hierzu richtet die VCC-Plattform eine RMI-Anfrage (Remote Methode Invocation - Kommunikationsschnittstelle für den Datenaustausch, basierend auf Java-Technologien) an einen speziellen Web-Server des Providers (auch so genannter DMZ-Rechner, als in sich geschlossene Hardware-Architektur mit sehr restriktiven Zugriffsrechten und Firewalls), welcher die VCC-Plattform und das unternehmenseigene Intranet des Providers sicherheitstechnisch vom externen Internet/IP-Netz abkoppelt (so dass sich die VCC-Plattform in einer als demilitarisiert bezeichneten Zone befindet) sowie die RMI-Anfrage in einen https-Request umsetzt. Entsprechend einer anderen Möglichkeit kontaktiert die VCC-Plattform die Recheneinheil des Betreibers über einen so genannten RPC (Remote Procedure Call). Zur Abrechnung mit dem Betreiber der Mautstrecke verfügt das System vorzugsweise über eine spezielle Card Bill-Einheit (Karten-Abrechnungseinheit), wobei diese in Form entsprechender Hard- und/oder Softwarekomponenten in die VCC-Plattform integriert oder mit dieser gekoppelt ist.
Für einen komfortablen Kauf bzw. Verkauf der zur Auffüllung der auf der VCC-Plattform gehaltenen virtuellen Konten erforderlichen Geldeinheiten umfasst das System in einer Ausbaustufe weiterhin Verkaufsautomaten, welche für das Handling der PAN-Anforderung und -Bereitstellung am Automaten über ein REMAS (Remote Management System) mit der VCC-Plattform verbunden sind. Das mit Verkaufsautomaten und REMAS erweiterte System wird durch ein vom REMAS unterhaltenes Servicemodul komplettiert. Dieses Servicemodul dient der Generierung von Alarm- und Fehlermeldungen im Falle des Eintritts von Störungen am Automaten. Durch die Übermittlung solcher Störungsmeldungen an einen örtlichen Servicestützpunkt ist es möglich, aufgetretene Störungen sehr zeitnah durch einen sich zum Automaten begebenden Servicetechniker beseitigen zu lassen. Soweit von einem REMAS und einem Servicemodul die Rede ist, handelt es sich hierbei um Hardware- oder um Softwarekomponenten bzw. um deren Kombination. Bezogen auf die Darstellung eines Systems handelt es sich jedoch nicht zwingend um physisch voneinander zu trennende Bestandteile des hier betrachteten erfinderischen Gesamtsystems.
Eine weitere vorteilhafte Ausbildung des Systems sieht die Einbeziehung von unter Vermittlung durch die VCC-Plattform ansprechbaren, vorzugsweise webbasierten Call Centern vor.

Das Verfahren sowie das System sollen nachfolgend anhand von Ausführungsbeispielen nochmals näher erläutert werden. In den zugehörigen Zeichnungen zeigen:
- Fig. 1a u. 1b:: Einen beispielhaften Buchungsablauf, wobei Fig. 1b die Fortsetzung des Schemas nach Fig. 1a darstellt;
- Fig. 2:: Die schematische Darstellung des Grundprinzips eines zur Durchführung des Verfahrens geeigneten Systems;
- Fig. 3:: Eine Erweiterung des Systems nach der Fig. 2 mit der Möglichkeit des Erwerbs der zur Auffüllung des virtuellen Kontos erforderlichen Geldeinheit über einen Verkaufsautomaten;
- Fig. 4:: Eine modifizierte Variante des Systems nach Fig. 3;
- Fig. 5:: Den Ablauf der erstmaligen Registrierung eines Kunden unter Einbeziehung eines (webbasierten) Call Centers und/oder der Möglichkeit der Internetregistrierung;
- Fig. 6:: Ein Schema betreffend die Abrechnung mit einem Betreiber bzw. einer Betreibergesellschaft.

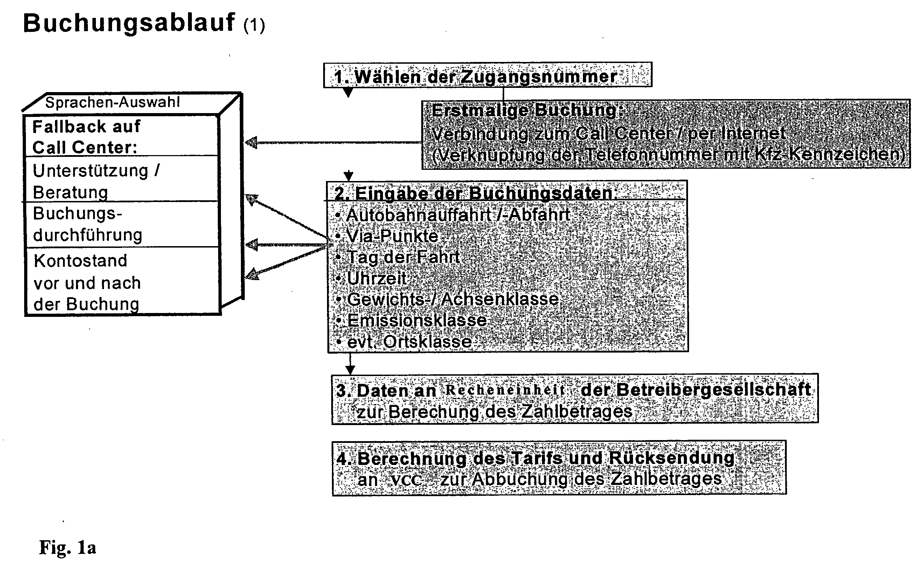

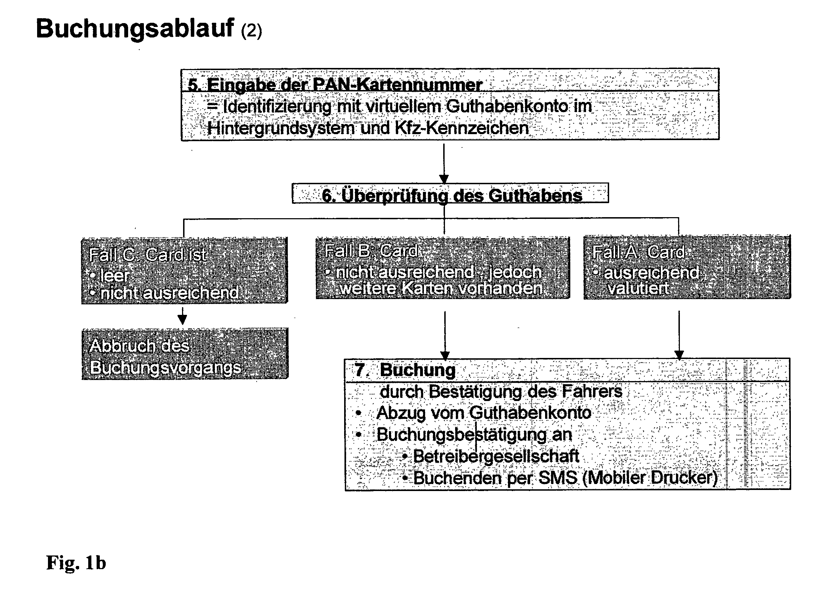

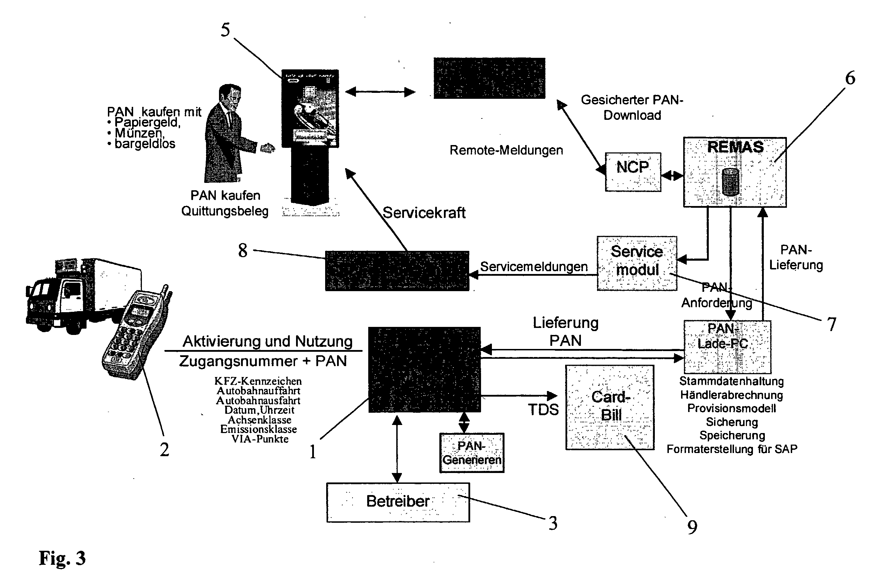

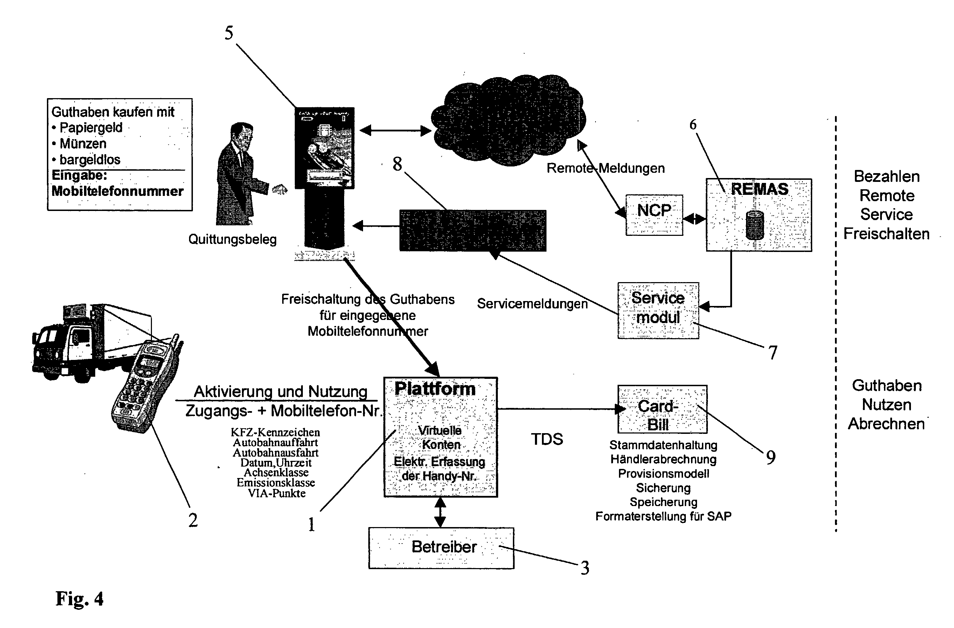

In der Fig. 1 (Fig. 1a und 1b) ist beispielhaft der mögliche Ablauf für die Buchung, also den Erwerb einer Nutzungsberechtigung zum Befahren einer Mautstrecke, in einer schematischen Darstellung wiedergegeben. Der Buchungsablauf vollzieht sich wie folgt. Der Benutzer (Kunde) der Mautstrecke wählt sich mittels einer zentralen Zugangsnummer, vorzugsweise über sein Handy 2 in das System, respektive in einen Zentralrechner 1 (VCC-Plattform), ein. Im Falle einer erstmaligen Buchung wird er nach der im Beispiel dargestellten Verfahrensvariante im Zuge der Einleitung des Buchungsdialoges zunächst an ein Call Center 4 (vorzugsweise webbasiert) oder auf eine der Registrierung dienende Website im Internet umgeleitet. Hier erfolgt beispielsweise die einmalige Erhebung bestimmter Daten und gegebenenfalls eine feste Verknüpfung der Rufnummer mit dem Kfz-Kennzeichen und somit mit dem virtuellen Konto. Nach Beendigung der Verbindung zum Call Center 4 wird der Benutzer zur Fortsetzung des Buchungsdialogs auf die VCC-Plattform 1 zurückgeführt. Der Kunde wird hier zur Angabe von Daten über die Art und den Umfang der vorgesehenen Benutzung eines gebührenpflichtigen Streckenabschnitts sowie über sein Fahrzeug aufgefordert. Wie angegeben, wird dabei beispielsweise erfragt, an welchem Punkt er auf die gebührenpflichtige Strecke auffährt (z. B. Autobahn) und wo er sie wieder verlässt. Weiterhin werden Tag und gegebenenfalls (vorgesehene) Uhrzeit des Befahrens der Mautstrecke abgefragt. Zu seinem Fahrzeug soll der Kunde, gemäß dem Beispiel, die Gewichts-/Achsenklasse und die Emissionsklasse angeben. Für private Nutzer kann der Umfang der anzugebenden Daten zur Vereinfachung des Dialogs unter Umständen auch eingeschränkt werden. Die Daten werden dann an die Recheneinheit 3 des Betreibers bzw. der Betreibergesellschaft zur Berechnung des Zahlbetrages (Nutzungsentgelts) übermittelt. Auf dem System (Recheneinheit 3) des Betreibers erfolgt die Berechnung des Tarifs und die Rücksendung hieraus resultierender Daten an die VCC-Plattform 1, wo schließlich die Abbuchung des Nutzungsentgelts vorbereitet wird. Der Kunde erhält eine Information über die Höhe des zu entrichtenden Entgelts bzw. der Gebühr und veranlasst das System durch eine Bestätigung (beispielsweise drücken einer Taste am Handy 2) und Eingabe der PAN zur Abbuchung des entsprechenden Betrages von dem auf der VCC-Plattform 1 geführten virtuellen Guthabenkonto. Von dem Hintergrundsystem wird dieses Guthabenkonto in Korrespondenz mit der angegebenen PAN und dem Kfz-Kennzeichen geführt. Je nach Verfahrensgestaltung kann jedoch auch das Drücken einer Bestätigungstaste ohne PAN-Eingabe zur Initiierung des Buchungsvorgangs ausreichen. Dies ist dann der Fall, wenn das virtuelle Konto bereits fest mit der Rufnummer des vom Kunden zur Buchung verwendeten MTK 2 verknüpft ist. Nähere Ausführungen hierzu sollen im Zusammenhang mit der Erläuterung der Figuren 3 und 4 gegeben werden.
Nach der Bestätigung der vom System gelieferten Angaben durch den Benutzer erfolgt die Buchung, wobei zunächst das virtuelle Konto des Kunden darauf überprüft wird, ob der zu entrichtende Gebührenbetrag verfügbar ist. Entsprechend dem Ergebnis dieser Überprüfung verzweigt das System in unterschiedliche Äste des Verfahrensablaufs, welche in der Übersicht durch die Fälle A bis C verdeutlicht sind. Bei ausreichender Deckung des Kontos (es wurden zuvor Guthaben in ausreichender Höhe durch den Kunden freigeschaltet) erfolgt unmittelbar die Buchung und somit der Erwerb eines Nutzungsrechts, also der Erlaubnis die Mautstrecke o. ä. zu befahren. Das entsprechende Entgelt wird von dem virtuellen Konto abgezogen. Sowohl der Betreiber der Mautstrecke als auch der Benutzer erhalten eine Buchungsbestätigung. An den Benutzer wird die Buchungsbestätigung beispielsweise per SMS übermittelt. Je nach Ausstattung der von ihm mitgeführten Geräte 2, 2' kann der Kunde die Buchungsbestätigung auch ausdrucken lassen.

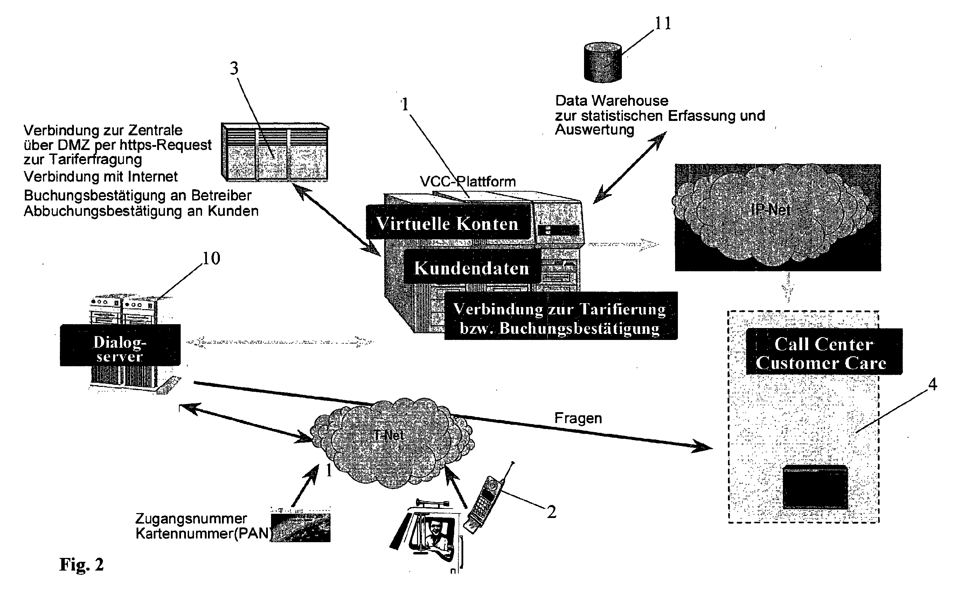

Die Fig. 2 stellt das zur Durchführung des Verfahrens verwendete System in einer beispielhaften Konfiguration als vereinfachtes Prinzipschema dar. Kernbestandteile des Systems sind der Zentralrechner 1 beim Service-Provider (VCC-Plattform), eine Recheneinheit 3 des Betreibers der Mautstrecke sowie die von den Benutzern verwendeten Zugangsmittel zum System, wie Mobilfunkgeräte 2 oder Geräte mit Internetzugang 2'. In dem dargestellten Beispiel erfolgt die Kommunikation des Benutzers mit der VCC-Plattform 1 zum Zwecke des Freischaltens eines Guthabens oder der Buchung einer Nutzungsberechtigung mittels eines Handys 2. Die Kommunikation mit der VCC-Plattform 1 erfolgt unter Vermittlung eines zwischengeschalteten Dialogservers (10). Hierbei handelt es sich beispielsweise um eine Mehrzahl von WIN-NT-Systemen. Die Kommunikation zwischen der VCC-Plattform 1, auf welcher die virtuellen Guthabenkonten und Kundendaten verwaltet werden sowie der Recheneinheit 3 des Betreibers erfolgt beispielsweise beginnend mit einem an die Recheneinheit 3 gerichteten https-Request. Aus sicherheitstechnischen Überlegungen ist dabei vorzugsweise ein so genannter (hier nicht dargestellter) DMZ-Rechner in die Verbindung zwischen der VCC-Plattform 1 und der Recheneinheit 3 des Betreibers eingefügt. Dieser schottet die VCC-Plattform 1 sowie des Intranet des Service-Providers sicherheitstechnisch gegen das IP-Netz ab. Er verfügt dazu aus- und eingangsseitig über eine Firewall. Zum Ansprechen der Recheneinheit 3 des Betreibers wird daher durch die VCC-Plattform 1 eine RMI-Anfrage an den DMZ-Rechner gerichtet, welcher diese in den der Recheneinheit 3 des Betreibers zuzuführenden https-Request umsetzt. Wie bereits dargestellt, erfolgt im Zuge des Datenaustausches zwischen der VCC-Plattform 1 und der Recheneinheit 3 die Berechnung des jeweils zu zahlenden Nutzungsentgeltes und, im Falle einer Buchung, die Buchungsbestätigung für den Betreiber.
Das in der Übersicht dargestellte System ist noch um ein Call Center 4 und ein Data Warehouse 11 erweitert. Das Call Center 4 dient beispielsweise dazu, die Erstregistrierung eines Kunden zu steuern, ihn bei der Buchung zu unterstützen oder ihm für auftretende Fragen zur Verfügung zu stehen. Gemäß der in der Fig. 2 gegebenen Darstellung ist das Call Center 4 webbasiert und daher über das Internet/IP-Netz mit der VCC-Plattform 1 verbunden. Das optionale Data Warehouse 11 dient zur statistischen Erfassung von Buchungsvorgängen zum Zwecke technisch-ökonomischer Auswertungen. Wie bereits dargestellt, sind unter Beibehaltung des grundsätzlichen erfinderischen Prinzips unterschiedliche Varianten für den Erwerb der zur Auffüllung des Guthabens eines virtuellen Kontos erforderlichen Geldeinheiten denkbar. Im einfachsten Fall werden diese Geldeinheiten durch den Kunden in Form so genannter Prepaid-Karten an einem Kiosk oder Verkaufsstand erworben.
Eine andere Möglichkeit besteht im Kauf an einem dafür vorgesehenen Automaten 5. Diese Möglichkeit wird durch die Fig. 3 und 4 wiedergegeben, wobei die Fig. 4 eine modifizierte Variante der Konfiguration nach der Fig. 3 betrifft. Bei der Bedienung des Automaten 5 fordert der Kunde gemäß dem Ablauf nach Fig. 3 beim System eine PAN an. Der Verkaufsautomat ist hierzu via Telefonnetz (ISDN, GSM, UMTS oder ähnliches) über ein REMAS 6 (Remote Managing System) mit der VCC-Plattform 1 verbunden. Über diese Verbindung (NPC steht lediglich für das dazu verwendete Network Control Protocol) wird der VCC-Plattform 1 die PAN-Anforderung zugeführt. Auf der VCC-Plattform 1 bzw. einer ihr zumindest unmittelbar zugeordneten Einheit wird hieraufhin eine PAN generiert. Über ein im Beispiel mit PAN-Lade-PC bezeichnetes Modul und das REMAS 6 erfolgt die Lieferung der PAN zum Automaten 5. Der Kunde erhält die PAN hier zusammen mit einem Quittungsbeleg über den Kauf der Geldeinheiten. Die PAN ist beispielsweise auf dem Quittungsbeleg aufgedruckt. Ebenso wie eine vorgedruckte Prepaid-Karte kann der Quittungsbeleg mit der aufgedruckten PAN durch den Erwerber selbstverständlich gegebenenfalls auch an Drittpersonen zur Verwendung übergeben werden, da die Verkopplung der PAN mit einem virtuellen Konto nicht bereits beim Kauf des Guthabens, sondern erst später bei seiner Freischaltung unter Verwendung der PAN erfolgt. Das den Informations- und Datenverkehr zwischen den Verkaufsautomaten 5 und der VCC-Plattform 1 managende REMAS 6 verfügt oder ist gekoppelt mit einem Servicemodul 7. Im Falle einer an einem Automaten 5 auftretenden Störung wird durch das Servicemodul 7 eine Fehlermeldung generiert und an einen Servicestützpunkt 8 zur Veranlassung einer Reparatur des Automaten 5 übermittelt. Zur VCC-Plattform 1 gehört außerdem eine darin integrierte bzw. mit ihr gekoppelte Card Bill-Einheit 9, vermittels welcher die Abrechnung mit dem Betreiber erfolgt.

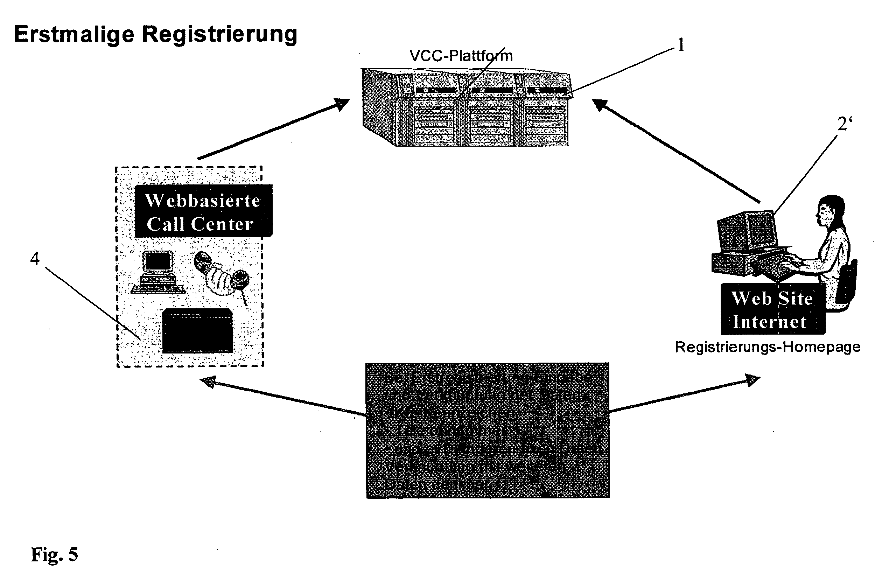

In der Fig. 4 ist eine gegenüber der Fig. 3 geringfügig modifizierte Systemvariante dargestellt. Hier wird der Kunde (späterer Benutzer gebührenpflichtiger Wegstrecken) im Zusammenhang mit dem Erwerb eines Guthabens am Automaten 5 zur Eingabe der Rufnummer des später zur Buchung zu verwendenden MTK 2 (Mobiltelefon bzw. Handy oder dergleichen) aufgefordert. Bei dieser Variante erhält der Kunde keine PAN oder sie wird gegebenenfalls unmittelbar auf sein Handy 2 geladen. Im erstgenannten Fall (ohne PAN) wird das Guthaben unmittelbar und unter Bezug auf die angegebene Rufnummer dem virtuellen Konto gutgeschrieben. Die Buchung von Nutzungsberechtigungen vermittels des Systems ist daher künftig unmittelbar an diese Rufnummer gebunden. Dies hat den Vorteil, dass die Rufnummer des Kunden bei der Einwahl in das System zum Zweck der Buchung automatisch erkannt und alle weiteren Vorgänge, insbesondere die Buchung selbst, unmittelbar auf das korrespondierende Konto bezogen werden. Dabei wird eine PAN zur Ausführung der Buchung durch den Benutzer (Kunden) nicht mehr benötigt. Sie kann jedoch, wie bereits dargestellt, beispielsweise aus Sicherheitserwägungen, zusätzlich Verwendung finden
Durch die Fig. 5 ist nochmals in einfacher Form die Einbeziehung eines webbasierten Call Centers 4 in den Vorgang einer erstmaligen Registrierung eines Benutzers veranschaulicht. Dabei kann die Registrierung unter Kontaktaufnahme zur VCC-Plattform 1 und Einbeziehung des webbasierten Call Centers 1 vom Benutzer auch mittels eines Gerätes 2' mit Internetzugang (PC) auf einer Registrierungs-Hompage durchgeführt werden. Nach der erstmaligen Registrierung ist eine Verzweigung zum Call Center 4 bei Buchungsvorgängen nur noch erforderlich sofern vom Kunden zur Klärung von Fragen gewünscht. Bei der erstmaligen Registrierung erfolgt daher eine fixe Verknüpfung kundenspezifischer Daten, insbesondere der Telefonnummer eines MTK 2 mit einem Kfz-Kennzeichen und hieraus resultierend, mit einem virtuellen Guthabenkonto.

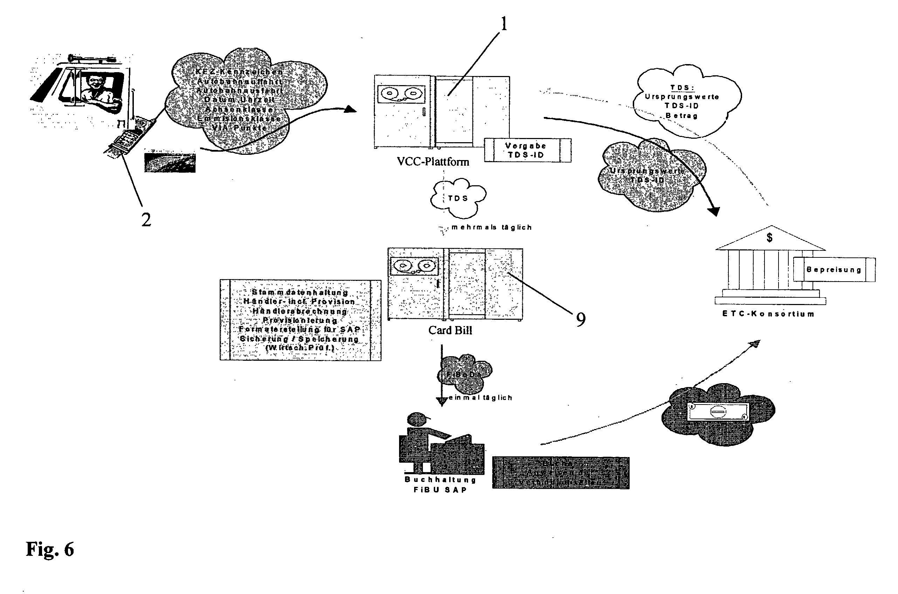

Die Fig. 6 zeigt in beispielhafter und im Grunde selbst erklärender Darstellung die Vorgänge bei der Abrechnung mit dem Betreiber bzw. der Betreibergesellschaft einer Mautstrecke. Die vom Kunden bei einer Buchung angegebenen Daten werden in Form von Transaktionsdatensätzen (TDS) an den Betreiber (genau genommen an dessen in der Fig. nicht dargestellte Recheneinheit 3) übertragen und der auf der Grundlage dieser Daten errechnete Gebührenbetrag (das Nutzungsentgelt) in analoger Weise an die VCC-Plattform 1 übermittelt. Mehrmals täglich werden Buchungsdaten von der VCC-Plattform an die Card Bill-Einheit 9 übergeben. Diese Daten werden schließlich in aufbereiteter (gegebenenfalls auch der Zuordnung zu unterschiedlichen Betreibergesellschaften dienenden) Form zur Überweisung der gegenüber der Betreibergesellschaft bestehenden Verbindlichkeiten des Service-Providers an dessen Finanzbuchhaltung übergeben, wo sie in entsprechender Weise buchhalterisch behandelt werden.

### Liste der verwendeten Bezugszeichen

- 1: Zentralrechner (VCC-Plattform)
- 2: mobiles Telekommunikationsendgerät (MTK), Handy
- 2': Gerät mit Internetzugang
- 3: Recheneinheit (des Betreibers)
- 4: Call Center
- 5: (Verkaufs-) Automat
- 6: REMAS (Remote Managing System)
- 7.: Servicemodul
- 8: Servicestützpunkt
- 9: Card Bill-Einheit
- 10: Dialogserver
- 11: Data Warehouse

## Patentansprüche

1. Verfahren zur telekommunikationsgestützten Entrichtung und Abrechnung von Gebühren für die Nutzung von mit einem Fahrzeug gebührenpflichtig zu befahrenden Abschnitten, vorzugsweise für die Nutzung mautpflichtiger Wegstrecken, bei welchem die Entrichtung der Gebühren zum Erwerb einer Nutzungsberechtigung vorab und ortsunabhängig durch die mittels eines mobilen Telekommunikationsendgerätes (MTK) (2) oder eines Internetzugangs (2') zu Gunsten des Betreibers eines gebührenpflichtigen Abschnitts veranlasste Abbuchung von einem auf einem Zentralrechner (1) unter der Rufnummer des MTK (2) oder/und einem Identitätskriterium (Personal Account Number - PAN) ansprechbaren und verwalteten virtuellen Guthabenkonto erfolgt, welches im Prepaid-Modus durch den Kauf sowie die Freischaltung von Geldeinheiten mit einem Guthaben aufzufüllen ist, wobei die Einrichtung eines neuen Kontos und die Freischaltung eines Guthabens ebenfalls vermittels der Rufnummer des MTK (2) oder/und einer beim Kauf von Geldeinheiten erhaltenen PAN erfolgt.

2. Verfahren nach Anspruch 1, **dadurch gekennzeichnet, dass** zur Entrichtung der Gebühren, veranlasst durch einen Benutzer, mit einem MTK (2) über eine dem Betreiber des gebührenpflichtigen Abschnitts zugeordnete zentrale Rufnummer oder über das Internet mit einer dem Betreiber zugeordneten IP-Adresse eine Telekommunikationsverbindung zu einem Zentralrechner (1) eines Service-Providers aufgebaut wird, in einem Dialog (Buchungsdialog) vermittels des MTK (2) oder eines zum Aufbau einer IP-Verbindung verwendeten Endgerätes (2') die zur Bestimmung von Art und Umfang der beabsichtigten gebührenpflichtigen Nutzung erforderlichen, zumindest das Kraftfahrzeugkennzeichen enthaltenden Daten an den Zentralrechner (1) übermittelt werden, basierend auf diesen Angaben von einer hierzu vom Zentralrechner (1) angesprochenen Rechnereinheit (3) des Betreibers das Nutzungsentgelt ermittelt und dieses in Fortführung des Buchungsdialogs, nach Bestätigung durch den Benutzer von dessen virtuellen, auf dem Zentralrechner (1) geführten Guthabenkonto unter fester sowie zweckbestimmter Verknüpfung mit dem angegebenen Kraftfahrzeugkennzeichen, bezogen auf die Rufnummer des MTK (2) oder/und eine PAN, abgebucht wird (Buchung), wobei die Ausführung der Buchung das Vorhandensein eines dem Nutzungsentgelt entsprechenden, freigeschalteten Guthabens auf dem virtuellen Konto voraussetzt und der Betreiber des gebührenpflichtigen Abschnitts für jede Buchung eine Buchungsbestätigung sowie vom Service-Provider ein dem Buchungsbetrag oder einem Teil davon entsprechendes Entgelt erhält.

3. Verfahren nach Anspruch 1 oder 2, **dadurch gekennzeichnet, dass** der Benutzer über den Erwerb (Buchung) einer Nutzungsberechtigung eine Buchungsbestätigung in Form einer SMS oder E-Mail erhält.

4. Verfahren nach Anspruch 2, **dadurch gekennzeichnet, dass** der Buchungsdialog sprachgesteuert geführt wird.

5. Verfahren nach Anspruch 2 oder 4, **dadurch gekennzeichnet, dass** sich der Benutzer bei auftretenden Fragen während des Buchungsdialogs mit einem Call Center (4) verbinden lassen kann, wobei nach der Klärung der Fragen eine Rückkehr zum Buchungsdialog erfolgt oder die Buchung durch das Call Center (4) durchgeführt wird.

6. Verfahren nach Anspruch 5, **dadurch gekennzeichnet, dass** der Buchungsdialog beim erstmaligen Erwerb einer Nutzungsberechtigung unter Einbeziehung eines Call Centers (4) oder einer Internet-Website geführt wird.

7. Verfahren nach Anspruch 2 oder 4, **dadurch gekennzeichnet, dass** der Buchungsdialog eine Stornierung oder Umbuchung früherer Buchungen ermöglicht, wobei das Stornieren oder Umbuchen ebenfalls mittels der Rufnummer des MTK (2) oder/und einer PAN erfolgt und hierdurch gegebenenfalls zum Buchungsbetrag der früheren Buchung entstehende Differenzen auf dem virtuellen Guthabenkonto des Benutzers gutgeschrieben oder von diesem zusätzlich abgebucht sowie die sich ergebenden Änderungen gegenüber dem Betreiber in Form entsprechender Umbuchungsbestätigungen ausgewiesen und bei der Abführung der ihm zustehenden Entgelte durch den Service-Provider ausgeglichen werden.

8. Verfahren nach einem der Ansprüche 1 bis 7, **dadurch gekennzeichnet, dass** der Kauf einer zur Auffüllung des virtuellen Kontos erforderlichen Geldeinheit durch den Kauf einer diese Geldeinheit repräsentierenden Prepaid-Karte erfolgt, auf welcher die zur Freischaltung der Geldeinheit und gegebenenfalls zur Ausführung von Buchungen erforderliche PAN angegeben ist.

9. Verfahren nach einem der Ansprüche 1 bis 7, **dadurch gekennzeichnet, dass** der Kauf einer zur Auffüllung des virtuellen Kontos erforderlichen Geldeinheit an einem mit dem Zentralrechner in Verbindung stehenden Automaten (5) und die Freischaltung des entsprechenden Guthabens für das auf dem Zentralrechner (1) verwaltete Konto unmittelbar beim Kauf der Geldeinheit durch Eingabe der in einem Dialog von dem Automaten (5) abgeforderten Rufnummer eines MTK (2) oder später, mittels einer auf einem Quittungsbeleg durch den Automaten (5) ausgegebenen PAN, erfolgt, wobei gegebenenfalls auch im Falle einer unmittelbaren Freischaltung durch die Rufnummer eines MTK (2) vom Zentralrechner (1) PAN's generiert und auf das MTK (2) übertragen oder vom Automaten (5) ausgegeben werden.

10. Verfahren nach einem der Ansprüche 1 bis 9, **dadurch gekennzeichnet, dass** die Daten beim Einrichten virtueller Konten, bei der Freischaltung von Guthaben oder beim Buchen einer Nutzungsberechtigung zumindest teilweise in verschlüsselter Form ausgetauscht werden.

11. Verfahren nach Anspruch 10, **dadurch gekennzeichnet, dass** die Verschlüsselung der Daten unter Nutzung des SSL-Protokolls (Secure Socket Layer-Protocol) erfolgt.

12. System zur telekommunikationsgestützten Entrichtung und Abrechnung von Gebühren für die Nutzung von mit einem Fahrzeug gebührenpflichtig zu befahrenden Abschnitten, vorzugsweise für die Nutzung mautpflichtiger Wegstrecken, mindestens umfassend einen von einem Service-Provider betriebenen sowie über eine dem Betreiber eines gebührenpflichtigen Abschnitts zugeordnete Rufnummer oder/und eine IP-Adresse anwählbaren Zentralrechner (1) (VCC-Plattform = Virtuelle Calling Card-Plattform) zur Verwaltung virtueller Guthabenkonten, eine mit der VCC-Plattform (1) verbindbare und von ihr ansprechbare Recheneinheit (3) des Betreibers zum Vorhalten von Tarifdaten und Berechnen von Nutzungsentgelten sowie mobile Telekommunikationsendgeräte (2) (MTK) oder Geräte mit Internet-Zugang (2'), mittels welcher Benutzer eines gebührenpflichtigen Abschnitts zum Zwecke des Einrichtens, des Freischaltens oder des Erwerbs (Buchens) einer Nutzungsberechtigung Zugriff auf ein oder mehrere für sie auf der VCC-Plattform (1) unter der Rufnummer eines MTK (2) oder/und einem Identitätskriterium (Personal Account Number - PAN) verwaltete virtuelle Guthabenkonten haben.

13. System nach Anspruch 12, **dadurch gekennzeichnet, dass** die Zentrale der VCC-Plattform (1) als Massiv Parallel Rechner ausgebildet ist.

14. System nach Anspruch 12 oder 13, **dadurch gekennzeichnet, dass** die Recheneinheit (3) des Betreibers über einen https-Request ansprechbar ist, wobei eine entsprechende Anfrage der VCC-Plattform (1) an diese Recheneinheit (3) zunächst über einen die VCC-Plattform (1) und das Intranet des Service-Providers sicherheitstechnisch vom IP-Netz trennenden Rechner geführt und dort in den https-Request umgesetzt wird.

15. System nach Anspruch 12 oder 13, **dadurch gekennzeichnet, dass** die Recheneinheit (3) des Betreibers des gebührenpflichtigen Abschnitts über ein RPC (Remote Procedure Call) ansprechbar ist.

16. System nach Anspruch 12 oder 13, **dadurch gekennzeichnet, dass** in das System Verkaufsautomaten (5) für den Erwerb eines Prepaid-Guthabens einbezogen sind, welche über eine Verbindung zur VCC-Plattform (1) verfügen, wobei über diese Verbindung auf der VCC-Plattform (1) generierte PAN's an die Verkaufsautomaten (5) übermittelt oder/und durch Eingabe der Rufnummern von MTK's Guthaben für auf der VCC-Plattform (1) verwaltete Konten freigeschaltet werden.

17. System nach Anspruch 16, **dadurch gekennzeichnet, dass** der Dialog bzw. der Datenaustausch zwischen den Verkaufsautomaten (5) und der VCC-Plattform (1) über ein REMAS (6) (Remote Management System) geführt wird.

18. System nach Anspruch 17, **dadurch gekennzeichnet, dass** das REMAS (6) über ein Servicemodul (7) verfügt oder mit einem Servicemodul (7) gekoppelt ist, durch welches im Falle von an den Verkaufsautomaten (5) auftretenden Störungen automatisch eine Fehlermeldung generiert und an einen Servicestützpunkt (8) übermittelt wird.

19. System nach einem der Ansprüche 12 bis 18, **dadurch gekennzeichnet, dass** das System zur Abrechnung mit dem Betreiber des gebührenpflichtigen Abschnitts über eine gesonderte, in die VCC-Plattform (1) integrierte oder mit ihr verbundene Card Bill-Einheit (9) (Karten-Abrechnungseinheit) verfügt.

20. System nach einem der Ansprüche 12 bis 19, **dadurch gekennzeichnet, dass** in das System ein oder mehrere Call Center (4) einbezogen ist bzw. sind.

21. System nach Anspruch 20, **dadurch gekennzeichnet, dass** das oder die Call Center (4) webbasiert ist bzw. sind.

22. System nach einem der Ansprüche 12 bis 20, **dadurch gekennzeichnet, dass** in das System eine Registrierungs-Website des Internet einbezogen ist.

23. System nach einem der Ansprüche 12 bis 22, **dadurch gekennzeichnet, dass** die Systemeinheiten unter Nutzung des SSL-Protokolls oder anderer vergleichbarer Sicherheitsprotokolle miteinander kommunizieren.
